**Europäisches Patentamt**

**European Patent Office**

**Office européen des brevets**

(19)

(11) Numéro de publication : **0 469 509 B1**

(12)

# FASCICULE DE BREVET EUROPEEN

(45) Date de publication du fascicule du brevet :
**11.01.95 Bulletin 95/02**

(51) Int. Cl.⁶ : **H02P 7/62**

(21) Numéro de dépôt : **91112699.3**

(22) Date de dépôt : **29.07.91**

(54) **Procédé et dispositif de commande de moteur asynchrone par régulation de flux d'induction magnétique.**

(30) Priorité : **01.08.90 FR 9009847**

(43) Date de publication de la demande :
**05.02.92 Bulletin 92/06**

(45) Mention de la délivrance du brevet :
**11.01.95 Bulletin 95/02**

(84) Etats contractants désignés :
**AT BE CH DE ES FR GB IT LI NL SE**

(56) Documents cités :
**EP-A- 0 335 180**
**US-A- 4 431 957**
**US-A- 4 470 000**

(73) Titulaire : **GEC ALSTHOM SA**
**38, avenue Kléber**
**F-75116 Paris (FR)**

(72) Inventeur : **Bavard, Jean**
**208, rue de Saint Cyr**
**F-69000 Lyon (FR)**
Inventeur : **Wei, Liming**
**173, rue Anatole France**
**F-69100 Villeurbanne (FR)**

(74) Mandataire : **Weinmiller, Jürgen et al**
**Lennéstrasse 9**
**Postfach 24**
**D-82336 Feldafing (DE)**

Jouve, 18, rue Saint-Denis, 75001 PARIS

## Description

La présente invention concerne la commande de moteur asynchrone, par régulation de flux d'induction magnétique, ce flux pouvant être le flux statorique, d'entrefer, ou rotorique.

Il est connu de réaliser une commande de moteur asynchrone par asservissement de flux à une valeur de consigne (voir US-A-4 431 957).

Une telle commande nécessite une mesure de flux, par exemple du flux rotorique, qui est jusqu'à présent réalisée soit en prévoyant des spires supplémentaires au rotor et en déduisant ce flux de la tension observée aux bornes de ces spires, soit en effectuant des mesures de tension et de courant statoriques et en déduisant ce flux de ces mesures et de paramètres caractéristiques du moteur, à partir des équations définissant le fonctionnement du moteur.

La première méthode a pour inconvénient, outre le fait de poser des problèmes pratiques de réalisation, d'être peu fiable, du fait que le capteur de flux, implanté directement dans le moteur, est soumis à un environnement relativement agressif en température, humidité, pollution, vibrations, chocs... etc.

La deuxième méthode a pour inconvénient de voir sa fiabilité affectée par les variations, en fonction de l'état thermique du moteur, de l'un au moins desdits paramètres caractéristiques du moteur, notamment sa résistance statorique.

Une façon d'éviter cet inconvénient consiste à implanter un capteur de température à l'intérieur du moteur, mais l'on retrouve alors des inconvénients de même nature que pour la première méthode précitée.

La présente invention a pour objet un procédé et un dispositif de commande d'un moteur asynchrone par régulation de flux permettant d'éviter ces inconvénients.

La présente invention a pour objet un procédé de commande de moteur asynchrone par asservissement de flux d'induction magnétique à une valeur de consigne, ledit asservissement comportant lui-même une mesure de flux, comportant à son tour une mesure de tension et de courant de ce moteur et une détermination d'un flux dit mesuré, à partir de ces mesures et de paramètres caractéristiques du moteur, suivant les équations de fonctionnement du moteur. Suivant l'invention, ledit flux mesuré est obtenu pour une valeur fixée arbitrairement de l'un au moins desdits paramètres, pouvant différer notablement de sa valeur réelle, et ladite consigne est corrigée de façon à compenser cette éventuelle différence.

D'autres objets et caractéristiques de la présente invention apparaîtront à la lecture de la description suivante d'exemples de réalisation, faite en relation avec les dessins ci-annexés dans lesquels :

- la figure 1 est un schéma synoptique d'un dispositif de commande de moteur asynchrone, par asservissement de flux, à titre d'exemple, rotorique, à une valeur de consigne, suivant un premier exemple de réalisation de l'invention ;
- la figure 2 est un schéma synoptique d'un dispositif de commande de moteur asynchrone par asservissement de flux, à titre d'exemple rotorique, à une valeur de consigne, suivant un deuxième exemple de réalisation de l'invention.

On rappelle que l'équation vectorielle définissant le fonctionnement d'un moteur asynchrone et reliant le vecteur courant statorique $\bar{I}_S$ et le vecteur tension statorique $\bar{V}_S$ au vecteur flux rotorique réel $\bar{\phi}r$ de ce moteur est la suivante :

$$\bar{\phi}r = \frac{L_r}{L_m} (\int \bar{V}_S dt - \int R_S \bar{I}_S dt - \sigma L_S \bar{I}_S) \quad (1)$$

avec :

$L_r$ : inductance cyclique du rotor
$L_m$ : inductance mutuelle cyclique entre stator et rotor
$R_S$ : résistance du stator par phase du moteur
$L_S$ : inductance cyclique du stator
$\sigma$ : coefficient de dispersion

$$(\sigma = 1 - Lm^2 / (L_r . L_s))$$

Cette équation permet à partir d'une mesure de tension et de courant statorique, et connaisssant la valeur des paramètres $L_r$, $L_m$, $R_s$, $L_s$ et $\sigma$ caractéristiques du moteur, de déterminer par des moyens de calcul classiques, le flux rotorique de ce moteur.

On définit un flux dit mesuré $\phi_{rmes}$, défini par :

2

$$\overline{\phi}_{rmes} = \frac{L^*_r}{L^*_m} \left( \int \overline{V_S} dt - \int R_S^* \overline{I_S} dt - \sigma^* L_S^* \overline{I_S} \right) \qquad (1')$$

dans laquelle le terme $R_S^*$ représente une valeur fixée arbitrairement de la résistance statorique, pouvant différer notablement de sa valeur réelle $R_S$.

On a utilisé le même symbole "*" pour les paramètres $L_r$, $L_m$, $L_S$ et $\sigma$ pour indiquer que ces paramètres ont également une valeur prédéterminée pouvant différer de leur valeur réelle bien que dans ce cas cette valeur prédéterminée varie peu, ou de façon déterminable, par rapport à cette valeur réelle, au cours du fonctionnement du moteur.

Ce flux mesuré est utilisé pour comparaison à la consigne de flux rotorique $\phi_{rcons}$, celle-ci étant corrigée de façon à compenser l'erreur due à cette différence entre les valeurs $R_S$ et $R_S^*$.

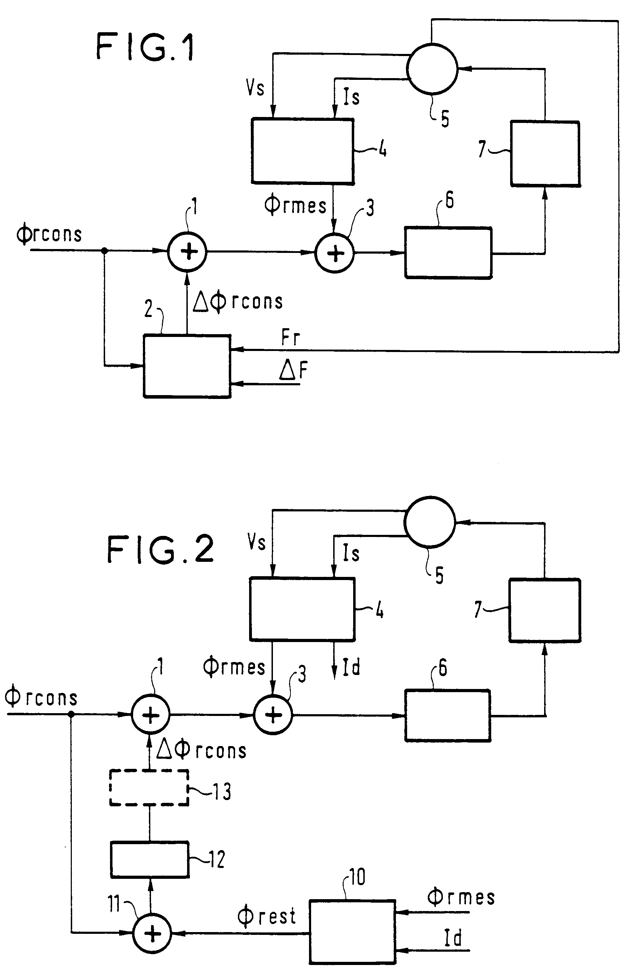

Suivant un premier exemple de réalisation de l'invention, illustré sur la figure 1, la valeur $R_S^*$ est choisie nulle, et la correction de la consigne de flux rotorique $\phi_{rcons}$ se fait par addition à cette consigne d'un terme correctif $\Delta\phi_{rcons}$ obtenu de la façon suivante.

La valeur $R_S^*$ étant nulle l'équation (1') donnant le flux rotorique mesuré $\phi_{rmes}$ s'écrit alors :

$$\overline{\phi}_{rmes} = \frac{L_R^*}{L_m^*} (\int \overline{V}_S dt - \sigma L_S \overline{I}_S) \qquad (2)$$

Dans un repère lié au flux rotorique mesuré $\phi_{rmes}$, cette dernière équation s'écrit :

$$\phi_{rmes} = \frac{L_R^*}{L_m^*} \left( \frac{V_{sq}}{w_S} - \sigma L_S I_{Sd} \right) \qquad (3)$$

où $I_{Sd}$ et $V_{Sq}$ désignent respectivement la composante du courant statorique $I_S$ suivant l'axe direct de ce repère et la composante de la tension statorique $V_S$ suivant l'axe en quadrature, et $w_S$ désigne la pulsation d'alimentation du stator.

Comme les vecteurs $\phi_{rmes}$ (flux rotorique mesuré) et $\phi_r$ (flux rotorique réel) ont peu d'écart angulaire, on peut remplacer $V_{Sq}$ et $I_{Sd}$ par leur expression en fonction du flux réel $\phi_r$, dans un repère lié à ce flux rotorique réel, ces expressions étant tirées des équations de fonctionnement du moteur et s'écrivant en régime permanent :

$$V_{sq} = w_S \phi_r \left( \frac{L_S}{L_m} + g \frac{R_S}{R_R} \frac{L_R}{L_m} \right) \qquad (4)$$

$$I_{sd} = \frac{\phi_r}{L_m} \qquad (5)$$

où "g" désigne le glissement du moteur.

On obtient alors :

$$\phi_{rmes} \simeq \frac{L_R^*}{L_m^*} \frac{L_S}{L_m} \phi_r + \frac{L_R^*}{L_m^*} g \frac{R_S}{R_R} \frac{L_R}{L_m} \phi_r \qquad (6)$$

$$- \sigma^* L_S^* \frac{L_R^*}{L_m^*} \frac{\phi_r}{L_m}$$

soit, compte tenu du fait que les valeurs $L_r^*$, $L_m^*$, $L_s^*$ et $\sigma^*$ sont approximativement égales respectivement aux valeurs $L_r$, $L_m$, $L_s$ et $\sigma$ :

$$\phi_{rmes} \; \simeq \; \phi_r \; \left\{ \frac{L_r L_S}{L_m 2} (1- \sigma) + \frac{R_S}{R_R} \frac{L_R 2}{L_m 2} \right\} \qquad (7)$$

soit encore, compte tenu du fait que :

$$\sigma = 1 - \frac{L_m 2}{L_R L_S}$$

$$\phi_{rmes} \; \simeq \; \phi_r \; \left\{ 1 + g \frac{R_S}{R_R} \frac{L_R 2}{L_m 2} \right\} \qquad (8)$$

Comme l'asservissement garantit :

$$\phi_{rmes} = \phi_{rcons} + \Delta\phi_{rcons}$$

pour avoir $\phi_r = \phi_{rcons}$ , il faut :

$$\Delta\phi_{rcons} = \phi_{rcons} \cdot g \frac{RS}{R_R} \frac{L_R 2}{L_m 2} \qquad (9)$$

On notera que dans cette expression la résistance statorique $R_S$ intervient par son rapport avec la résistance rotorique $R_R$. Comme ces deux résistances varient de la même façon au cours du fonctionnement du moteur, ce rapport est pratiquement constant quel que soit le point de fonctionnement du moteur, et peut être remplacé par une constante "k" fonction uniquement du type de moteur.

D'où :

$$\Delta\phi_{rcons} = k.g. \; \phi_{rcons} \qquad (10)$$

De plus un écart du rapport réel de ces résistances par rapport à la constante "k" choisie aura un effet très faible sur le couple fourni par le moteur.

On notera par ailleurs que le glissement "g" tendant vers zéro lorsque la vitesse de rotation du moteur augmente, la valeur $\Delta\phi_{rcons}$ tend également vers zéro et la correction de consigne tend à ne plus devenir nécessaire. Cette correction de la consigne s'impose par contre aux basses vitesses.

Sur la figure 1 est ainsi référencé 1 un additionneur qui ajoute à la consigne $\phi_{rcons}$ le terme correctif $\Delta\phi_{rcons}$ issu d'un moyen de calcul 2, classique, calculant le terme correctif $\Delta\phi_{rcons}$ suivant la formule (10) ci-dessus, à partir de la consigne $\phi_{rcons}$ et de valeurs $F_r$ et $\Delta F$ nécessaires au calcul du glissement "g", ce dernier s'exprimant en effet sous la forme :

$$g = \frac{F}{F_r + \Delta F}$$

où $F_r$ désigne la fréquence mécanique, ramenée en fréquence électrique, et $\Delta F$ la différence entre la fréquence statorique et Fr.

La valeur $F_r$ est par exemple mesurée et la valeur $\Delta F$ élaborée par des moyens de calcul classiques qui ne seront pas redécrits ici.

La valeur de consigne corrigée, obtenue en sortie de l'additionneur 1 est appliquée à un détecteur d'écart 3 entre cette valeur de consigne corrigée et la valeur du flux rotorique mesuré $\phi_{rmes}$, cette dernière étant élaborée par des moyens de calcul 4 opérant à partir de valeurs mesurées de la tension statorique $V_S$ et du courant statorique $I_S$ , du moteur, référencé 5.

Les moyens de calcul 4 sont des moyens de calcul classiques qui ne seront pas redécrits ici, à ceci près qu'ils opèrent ici avec une valeur $R_S^*$ nulle.

De façon classique, le signal issu du détecteur d'écart 3 est ensuite appliqué à un moyen de régulation 6, avant application à un organe 7 de commande du moteur, également classique.

Suivant un deuxième exemple de réalisation de l'invention illustré sur la figure 2, dans laquelle des éléments identiques à ceux de la figure 1 ont les mêmes références, la valeur arbitraire $R_S^*$ de résistance statorique peut être choisie non nulle ou nulle, et la correction de la consigne de flux rotorique $\phi_{rcons}$ se fait par addition à cette consigne d'un terme correctif $\Delta\phi_{rcons}$ obtenu de la façon suivante.

Un moyen de calcul 10 calcule un flux rotorique, dit estimé, $\phi_{rest}$, identifiable au flux rotorique réel $\phi_r$ du moteur, à partir du flux rotorique mesuré $\phi_{rmes}$, suivant une formule obtenue par exemple de la façon suivante.

On remplace, dans l'équation (1'), $V_S$ par son expression donnée par l'équation (1).

On obtient :

$$\overline{\phi}_{rmes} = \frac{L_r}{L_m}^* \cdot \left( \int \Delta R_S \, \overline{I_S} \, dt + \Delta \sigma L_S \, \overline{I_S} + \frac{L_m}{L_r} \, \overline{\phi}_r \right) \quad (3')$$

avec

$$\Delta R_S = R_S - R_S \,^*$$

$$\Delta \sigma L_S = \sigma L_S - \sigma \,^* L_S \,^*$$

soit, en régime permanent :

$$\overline{\phi}_{rmes} = \frac{L_r}{L_m}^* \left( - \frac{\Delta R_S}{W_S} \, j \, \overline{I_S} + \Delta \sigma L_S \, \overline{I_S} + \frac{L_m}{L_r} \, \overline{\phi}_r \right) \quad (4')$$

En effectuant une multiplication scalaire par $\overline{I}_S$ , on fait disparaître le terme

$$- \frac{\Delta R_s}{W_s} \, j \, \overline{I}_s$$

et on obtient :

$$\overline{\phi}_{rmes} \cdot \overline{I_S} = \frac{L_r}{L_m}^* \left( \Delta \sigma L_S \, I_S{}^2 + \frac{L_m}{L_r} \, \overline{\phi}_r \cdot \overline{I_S} \right) \quad (5')$$

Soient $I_d$ et $I_m$ respectivement les composantes de $I_S$ suivant l'axe direct de repères liés respectivement au flux rotorique mesuré $\phi_{rmes}$ et au flux rotorique réel $\phi r$.

On sait, d'après les équations de fonctionnement du moteur, que dans un repère lié au flux rotorique réel la composante $I_m$ s'exprime de la façon suivante :

$$Im = \frac{(1 + Tr \, p) \, \phi_r}{L_m} \quad (6')$$

où p désigne l'opérateur différentiel de Laplace et $T_r$ la constante de temps du rotor, avec

$$T_r = \frac{L_r}{R_r} .$$

L'équation (5') s'écrit alors :

$$\phi_{rmes} \cdot I_d = \frac{L_r}{L_m}^* \left( \Delta \sigma L_S \, I_S{}^2 + \frac{(1 + Trp) \phi_r{}^2}{L_r} \right) \quad (7')$$

D'où :

$$\phi_r = \sqrt{\frac{( \phi \, rmes.I_d - \frac{L_r}{L_m}^* \Delta \sigma L_S \, I_S{}^2 ) L_m \,^* L_r}{L_r \,^* ( 1 + T_r \, p )}} \quad (8')$$

En tenant compte du fait que $\Delta \sigma L_S$ est approximativement égal à zéro, et que $L_r^*$ est approximativement égal à $L_r$ et $L_m^*$ approximativement égal à $L_m$, on obtient un flux rotorique estimé $\phi_{rest}$ , proche du flux réel $\phi_r$ , défini par l'expression :

$$\phi rest = \sqrt{\frac{\phi rmes. \, I_d. \, L_m}{1 + T_r \, p}} \quad (9')$$

expression dans laquelle interviennent uniquement le flux mesuré $\phi_{rmes}$ , les paramètres $L_m$ et $T_r$ caractéristi-

ques du moteur et le courant statorique mesuré (par sa composante dans un repère lié au flux mesuré $\phi_{rmes}$).

Le moyen de calcul 10 reçoit donc en entrée le flux rotorique mesuré $\phi_{rmes}$ et la composante directe $I_d$ du courant statorique $I_S$ dans un repère lié à ce flux rotorique mesuré.

Un détecteur d'écart 11 détermine l'écart entre le flux rotorique estimé $\phi_{rest}$ et la consigne de flux rotorique $\phi_{rcons}$, cet écart étant ensuite appliqué à un moyen de régulation 12 ramenant cet écart à zéro.

On notera, en relation avec l'exemple de réalisation ainsi décrit, que le flux estimé pourrait être issu d'un système estimateur de flux autre que celui décrit ci-dessus à titre d'exemple, et que la correction de consigne permet dans cet exemple d'éviter les difficultés qui pourraient résulter d'une détection d'écart directe entre la consigne et ce flux estimé.

Afin d'effectuer cette correction de consigne aux basses vitesses et seulement jusqu'à une valeur déterminée, $F_{ro}$, de fréquence mécanique, le moyen de régulation 12 peut être suivi d'un moyen 13 permettant de rendre l'application du terme correctif $\Delta\phi_{rcons}$ à l'additionneur 1 effective seulement dans la gamme de vitesses considérée.

Dans l'exemple de la figure 1, ce dernier moyen serait intégré au moyen de calcul 2.

Le procédé de commande de moteur asynchrone par régulation de flux d'induction magnétique ainsi décrit permet ainsi d'obtenir une bonne précision, sans présenter les difficultés pratiques de réalisation rencontrées dans l'art antérieur.

On notera que les amplitudes des flux statorique, d'entrefer et rotorique étant très voisines, les mêmes principes de correction peuvent être utilisés quel que soit le flux utilisé dans la régulation.

## Revendications

1. Procédé de commande de moteur asynchrone par asservissement de flux d'induction magnétique à une valeur de consigne ($\Phi_{rcons}$), ledit asservissement comportant lui-même une mesure de flux comportant à son tour une mesure de tension ($V_S$) et de courant ($I_S$) de ce moteur, et une détermination d'un flux dit mesuré ($\Phi_{rmes}$), à partir de ces mesures et de paramètres caractéristiques du moteur, suivant les équations de fonctionnement du moteur, caractérisé en ce que ledit flux mesuré ($\Phi_{rmes}$) est obtenu pour une valeur fixée arbitrairement de l'un au moins desdits paramètres, pouvant différer notablement de sa valeur réelle, et en ce que ladite consigne ($\Phi_{rcons}$) est corrigée de façon à compenser cette éventuelle différence.

2. Procédé selon la revendication 1, caractérisé en ce que ladite régulation est une régulation de flux rotorique et en ce que lesdits courant et tension mesurés sont la tension ($V_S$) et le courant statoriques ($I_S$), et ledit paramètre ayant une valeur fixée arbitrairement, pouvant différer notablement de sa valeur réelle, la résistance statorique du moteur.

3. Procédé selon l'une des revendications 1 et 2, caractérisé en ce que ladite valeur fixée arbitrairement est choisie nulle et en ce que ladite consigne de flux $\Phi_{rcons}$ est corrigée par ajout d'un terme correctif $\Delta\Phi_{rcons}$ défini par :

$$\Delta\Phi_{rcons} = k\, g\, \Phi_{rcons}$$

où "g" désigne le glissement du moteur et "k" désigne une constante fonction du moteur.

4. Procédé selon l'une des revendications 1 et 2, caractérisé en ce que ladite valeur fixée arbitrairement est choisie nulle ou non nulle et en ce que ladite consigne ($\Phi_{rcons}$) est corrigée par ajout d'un terme correctif ($\Delta\Phi_{rcons}$) obtenu par détection d'écart entre ladite consigne et un flux ($\Phi_{rest}$), dit estimé, identifiable au flux réel et déterminé par ailleurs.

5. Procédé selon la revendication 4, caractérisé en ce que ledit flux estimé est obtenu, à partir du flux mesuré ($\Phi_{rmes}$), suivant une expression déduite des équations de fonctionnement du moteur, fonction du flux mesuré, de paramètres caractéristiques du moteur autres que ledit paramètre ayant une valeur fixée arbitrairement, pouvant différer de sa valeur réelle, et desdites mesures de tension ou de courant.

6. Procédé selon la revendication 5, caractérisé en ce que ledit flux estimé $\Phi_{rest}$ a pour expression :

$$\Phi_{rest} = \sqrt{\frac{L_m \cdot \Phi_{mes} \cdot I_d}{1 + Tr\, p}}$$

où $\Phi_{rmes}$ désigne le flux mesuré, $I_d$ sa composante directe dans un repère lié à ce flux mesuré, $L_m$ l'inductance mutuelle cyclique du stator par rapport au rotor, et $T_r$ la constante de temps du rotor.

7. Dispositif pour la mise en oeuvre du procédé selon la revendication 1, caractérisé en ce qu'il comporte des moyens (4) de calcul de flux mesuré, à partir des mesures de courant ($I_s$) et de tension ($V_s$) et de paramètres caractéristiques du moteur dont l'un au moins a une valeur fixée arbitrairement pouvant différer notablement de sa valeur réelle, et des moyens (1, 2, 11, 12) de correction de consigne de façon à compenser cette éventuelle différence.

8. Dispositif selon la revendication 7, pour la mise en oeuvre du procédé selon la revendication 3, caractérisé en ce que lesdits moyens de correction de consigne ($\Delta\Phi_{rcons}$) comportent des moyens (2) pour calculer ledit terme correctif et des moyens (1) pour ajouter ce terme correctif à la valeur de consigne ($\Phi_{rcons}$).

9. Dispositif selon la revendication 7, pour la mise en oeuvre du procédé selon l'une des revendications 5 et 6, caractérisé en ce que lesdits moyens de correction de consigne comportent des moyens (11) pour déterminer ledit écart entre la consigne ($\Phi_{rcons}$) et le flux rotorique estimé ($\Phi_{rest}$), des moyens (12) de régulation opérant sur l'écart ainsi déterminé, et des moyens (1) pour ajouter le terme correctif ($\Delta\Phi_{rcons}$) issu de ces moyens de régulation (12) à la valeur de consigne ($\Phi_{rcons}$).


**Patentansprüche**

1. Verfahren zum Steuern von Asynchronmotoren durch Regeln des magnetischen Induktionsflusses auf einen Sollwert ($\Phi_{rcons}$) wobei die Regelung ihrerseits eine Flußmessung umfaßt, die eine Messung der Spannung ($V_s$) und des Stromes ($I_s$) des Motors erfordert, sowie eine Bestimmung eines sogenannten gemessenen Flusses ($\Phi_{rmes}$) aus diesen Meßwerten und den charakteristischen Parametern des Motors gemäß den Betriebsgleichungen des Motors einschließen, dadurch gekennzeichnet, daß der gemessene Fluß ($\Phi_{rmes}$) für einen willkürlich festgesetzten Wert des mindestens einen der Parameter erhalten wird, der deutlich von seinem wirklichen Wert abweichen kann, und daß der Sollwert ($\Phi_{rcons}$) derart berichtigt wird, daß diese eventuelle Abweichung kompensiert wird.

2. Verfahren nach Anspruch 1, dadurch gekennzeichnet, daß die Regelung eine Rotorflußregelung ist und daß der gemessene Strom und die gemessene Spannung der Statorstrom ($I_s$) bzw. die Statorspannung ($V_s$) ist, wobei der Parameter, der einen willkürlich festgesetzten Wert hat, welcher deutlich von seinem wirklichen Wert abweichen kann, der Statorwiderstand des Motors ist.

3. Verfahren nach einem der Ansprüche 1 und 2, dadurch gekennzeichnet, daß der willkürlich festgesetzte Wert mit Null gewählt wird und daß der Sollwert des Flusses $\Phi_{rcons}$ durch Hinzufügen eines Korrekturterms $\Delta\Phi_{rcons}$ berichtigt wird, der definiert wird durch: $\Delta\Phi_{rcons} = k\ g\ \Phi_{rcons}$, wobei "g" den Schlupf des Motors und "k" eine vom Motor abhängige Konstante bezeichnet.

4. Verfahren nach einem der Ansprüche 1 und 2, dadurch gekennzeichnet, daß der willkürlich festgesetzte Wert gleich Null oder ungleich Null gewählt wird und daß der Sollwert $\Phi_{rcons}$ durch Hinzufügen eines Korrekturterms $\Delta\Phi_{rcons}$ berichtigt wird, der durch Erfassen der Abweichung zwischen dem Sollwert und einem sogenannten Schätzfluß ($\Phi_{rest}$) erhalten wird, der auf den wirklichen Fluß bezogen werden kann und auf andere Weise ermittelt wird.

5. Verfahren nach Anspruch 4, dadurch gekennzeichnet, daß der Schätzfluß aus dem gemessenen Fluß ($\Phi_{rmes}$) gemäß einer Formel erhalten wird, die aus den Betriebsgleichungen des Motors in Abhängigkeit vom gemessenen Fluß aus anderen charakteristischen Parametern des Motors als demjenigen Parameter, der einen gegebenenfalls vom wirklichen Wert abweichenden willkürlich festgesetzten Wert besitzt, und den Spannungs- oder Strommessungen abgeleitet ist.

6. Verfahren nach Anspruch 5, dadurch gekennzeichnet, daß der geschätzte Fluß $\Phi_{rest}$ ausgedrückt wird durch:

$$\Phi_{rest} = \sqrt{\frac{L_m \cdot \Phi_{mes} \cdot I_d}{1 + T_r\ p}}$$

wobei $\Phi_{rmes}$ der gemessene Fluß, $I_d$ seine direkte Komponente in einem mit dem gemessenen Fluß verbundenen Bezugssystem, $L_m$ die zyklische Wechselinduktivität des Stators relativ zum Rotor und $T_r$ die Zeitkonstante des Rotors ist.

7. Vorrichtung zur Durchführung des Verfahrens nach Anspruch 1, dadurch gekennzeichnet, daß sie Mittel (4) zur Berechnung des gemessenen Flusses aus den Messungen des Stromes ($I_s$) und der Spannung ($V_s$) und den charakteristischen Parametern des Motors aufweist, von denen mindestens eine einen willkürlich festgesetzten Wert besitzt, der deutlich von seinem wirklichen Wert abweichen kann, und daß die Vorrichtung Mittel (1, 2, 11, 12) zum Berichtigen des Sollwerts aufweist, derart, daß die eventuelle Abweichung kompensiert wird.

8. Vorrichtung nach Anspruch 7 zur Durchführung des Verfahrens nach Anspruch 3, dadurch gekennzeichnet, daß die Mittel zum Korrigieren des Sollwerts ($\Delta\Phi_{rcons}$) Mittel (2) zum Berechnen des Korrekturterms und Mittel (1) zum Hinzufügen des Korrekturterms zum Sollwert ($\Phi_{rcons}$) aufweisen.

9. Vorrichtung nach Anspruch 7 zur Durchführung des Verfahrens nach einem der Ansprüche 5 und 6, dadurch gekennzeichnet, daß die Mittel zum Berichtigen des Sollwerts Mittel (11) zum Bestimmen der Abweichung zwischen dem Sollwert ($\Phi_{rcons}$) und dem geschätzten Rotorfluß ($\Phi_{rest}$) Regelmittel (12), die die so ermittelten Abweichung berücksichtigen, und Mittel (1) zum Hinzufügen des Korrekturterms ($\Delta\Phi_{rcons}$), der von den Regelmitteln (12) ausgegeben wird, zum Sollwert ($\Phi_{rcons}$) aufweisen.

## Claims

1. Asynchronous motor control method by regulating a magnetic induction flux according to a set point value ($\Phi_{rcons}$), entailing a flux measurement involving a voltage ($V_S$) and current ($I_S$) measurement on the motor and determination of a measured flux ($\Phi_{rmes}$) from these measured values and parameters characteristic of the motor, using equations of operation of the motor, characterised in that said measured flux ($\Phi_{rmes}$) is obtained for an arbitrary fixed value of at least one of said parameters, possibly differing substantially from its real value, and in that said set point ($\Phi_{rcons}$) is corrected to compensate for any such difference.

2. Method according to claim 1 characterised in that it is the rotor flux that is regulated and in that said current and voltage measured are the stator voltage ($V_S$) and the stator current ($I_S$) and said parameter having an arbitrary fixed value, possibly differing substantially from its real value, is the stator resistance of the motor.

3. Method according to claim 1 or claim 2 characterised in that said arbitrary fixed value is a null value and in that said flux set point $\Phi_{rcons}$ is corrected by adding a corrective term $\Delta\Phi_{rcons}$ defined as follows:
$$\Delta\Phi_{rcons} = k \, g \, \Phi_{rcons}$$
where "g" denotes the slip of the motor and "k" denotes a constant dependent on the motor.

4. Method according to claim 1 or claim 2 characterised in that said arbitrary fixed value is a null or non-null value and said set point ($\Phi_{rcons}$) is corrected by adding a corrective term ($\Delta\Phi_{rcons}$) obtained by detection of the error between said set point and an estimated flux ($\Phi_{rest}$) close to the real flux and determined elsewhere.

5. Method according to claim 4 characterised in that said estimated flux is obtained from the measured flux ($\Phi_{rmes}$) using an equation deduced from the operating equations of the motor, dependent on the measured flux, on characteristic parameters of the motor other than said parameter having an arbitrary fixed value, possibly differing from its real value, and on said measured voltage and current values.

6. Method according to claim 5 characterised in that said estimated flux $\Phi_{rest}$ is given by the expression:
$$\Phi_{rest} = \sqrt{\frac{L_m \cdot \Phi_{rmes} \cdot I_d}{1 + T_r p}}$$

where $\Phi_{rmes}$ denotes the measured flux, $I_d$ its direct component in a frame of reference related to the measured flux, $L_m$ the cyclic mutual inductance of the stator relative to the rotor and $T_r$ the time constant of the rotor.

7. Device for implementing the method according to claim 1 characterised in that it comprises means (4) for calculating the measured flux from the measured values of current ($I_S$) and voltage ($V_S$) and parameters characteristic of the motor at least one of which has an arbitrary fixed value possibly differing substantially from its real value and means (1, 2, 11, 12) for correcting the set point to compensate any such difference.

8. Device according to claim 7 for implementing the method according to claim 3 characterised in that said set point correction ($\Delta\Phi_{rcons}$) means include means (2) for calculating said corrective term and means (1) for adding this corrective term to the set point value ($\Phi_{rcons}$).

9. Device according to claim 7 for implementing the method according to claim 5 or claim 6 characterised in that said set point correction means include means (11) for determining said error between the set point ($\Phi_{rcons}$) and the estimated rotor flux ($\Phi_{rest}$), regulator means (12) operating on the error thus determined, and means (1) for adding the corrective term ($\Delta\Phi_{rcons}$) from these regulator means (12) to the set point value ($\Phi_{rcons}$).

# FIG.1

# FIG.2